# EUROPEAN PATENT APPLICATION

(11) **EP 0 569 289 A1**
(43) Date of publication of application: **10.11.1993**
(21) Application number: 93401151.1
(22) Date of filing: 05.05.1993
(51) Int. Cl.: F02B 23/08, F02B 55/14

(54) **Internal combustion engine with improved anti-knocking function**

(30) Priority: 08.05.1992 JP 158476/92; 10.07.1992 JP 223157/92; 21.10.1992 JP 282840/92
(71) Applicant: YUGEN KAISHA ROYAL PORTRAIT, Suginami-Ku, Tokyo, 166 (JP)
(72) Inventor: Yaoita, Yasuhito, Tokyo (JP)
(74) Representative: Gérardin, Robert Jean René

(57) **Abstract**

A spark ignited internal combustion capable of preventing a knocking comprising: a plurality of combustion chambers (5,6) formed in a cylinder (1) when a piston (2) reaches its top dead center position; narrow communicating paths (7) for connecting adjacent combustion chambers (5,6) to each other; and ignition plugs (8) attached to remaining combustion chambers except for at least one combustion chamber, wherein a distance (b) of a downstream combustion chamber (6) in the flame propagating route in an axial direction of the cylinder is larger than a normal clearance of a squish area, and clearances of the communicating paths (7) are sufficiently smaller than the distance (b) of the downstream combustion chamber (6) in the flame propagating route in the axial direction of the cylinder. A present invention is applied to a rotary piston engine, which comprises: a rotor (62); two concave portions (62a) with a distance formed on upper face side of the rotor; a communicating path (67) formed between a projection (61a) on a trocoid face forming an inner surface of a casing and a flat portion (62b) between the two concave portions (62a) on the upper face of the rotor; two combustion chambers (64,65) formed on both sides of the communicating path (67); and an ignition plug (68,68') attached to either one of the combustion chambers (64,65), wherein a dimension of the flat portion (62b) is determined such that the projection (61a) continuously opposes the flat portion (62b) throughout a combustion process with high load.

## Description

### BACKGROUND OF THE INVENTION

### 1. Field of the Invention

This invention relates to the prevention of a knocking in a spark ignited internal combustion engine.

### 2. Description of the Prior Art

In a spark ignited internal combustion engine, combustion occurs intermittently. Then, a mixed gas flows into a combustion chamber at a suction process. As a result, the temperature of walls of the combustion chamber is low and a portion of the mixed gas which is in contact with the walls of the combustion chamber remains unburnt to form a quenching layer. Therefore, a piston and a cylinder are not directly exposed to a flame, which prevent them from melting.

When the output of the engine is increased and the rotation speed thereof becomes high, the temperature of the mixed gas before combustion is increased to allow an unburnt portion to be self-ignited at an end thereof (end gas zone) before the flame from an ignition plug reaches the unburnt portion. This phenomenon is called as a knocking. When the knocking occurs, the quenching layer which is formed so as to be in contact with the walls of the combustion chamber is broken, which causes the flame to directly reach the piston or the wall of the cylinder. As a result, those portions melt to break the engine shortly.

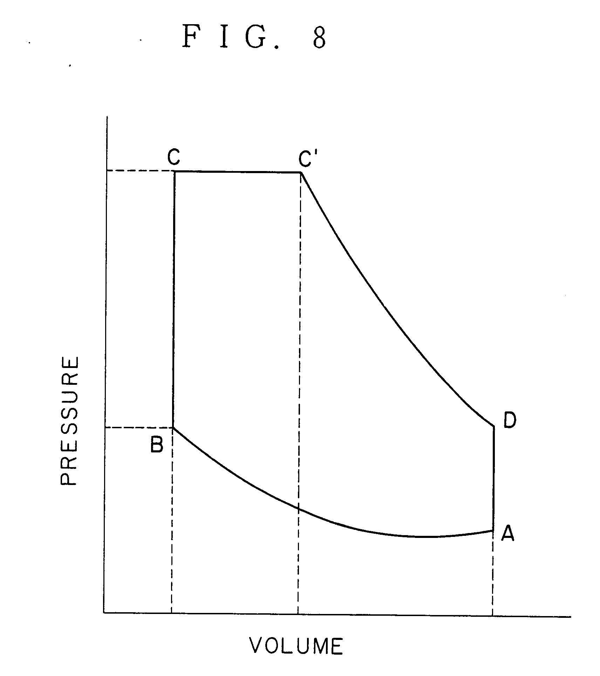

As a technic for preventing the knocking, there is a method of restricting the increase of the temperature of the mixed gas by increasing an air/fuel ratio of the mixed gas or mixing incombustible liquid into the mixed gas. However, with this method, the fuel consumption of the engine is increased or the efficiency of the engine decreases suddenly. Next, although there is a known method of delaying the timing of the ignition, an expansion ratio and an ngl (the ratio of the pressure at A to B in a composite cycle shown in Fig. 8) are decreased to reduce torque.

Further, in the magazine "Internal Combustion Engine", July 1981, pages 35 to 40, a method of decreasing the compression ratio is proposed, in which intake valves are closed early. However, an apparatus for achieving the method becomes complicated. Further, Japanese patent application Kokai No. Showa 62-129516 discloses a technique in which a squish area becomes narrower as it approaches a main combustion chamber. In the technique, the squish of the unburnt mixed gas flowing toward the ignition plug is strengthened to prevent the knocking. However, the squish of the unburnt mixed gas flowing toward the ignition plug is apt to be broken due to the expansion of combustion gas as a combustion process proceeds.

### SUMMARY OF THE INVENTION

The present invention has been achieved to eliminate the above drawbacks and an object thereof is to provide a spark ignited internal combustion engine capable of preventing a knocking by facilitating the cooling of the end gas zone.

To accomplish the above objective, a spark ignited internal combustion engine according to the present invention comprising: a plurality of combustion chambers formed in a cylinder when a piston reaches its top dead center position; narrow communicating paths for connecting adjacent combustion chambers to each other; and ignition plugs attached to remaining combustion chambers except for at least one combustion chamber, wherein a distance of a downstream combustion chamber in the flame propagating route in an axial direction of the cylinder is larger than a normal clearance of a squish area, and clearances of the communicating paths are sufficiently smaller than the distance of the downstream combustion chamber in the flame propagating route in the axial direction of the cylinder.

It is further object of the present invention to provided an internal combustion engine with improved unti-knocking function comprising: a rotor; two concave portions with a distance formed on upper side of the rotor; a communicating path formed between a projection on a trocoid face forming an inner surface of a casing and a flat portion between the two concave portions on the upper face of the rotor; two combustion chambers formed on both sides of the communicating path; and an ignition plug attached to either one of the combustion chambers, wherein a position and a dimension of the flat portion is determined such that the projection continuously opposes the flat portion throughout a combustion process with high load.

An internal combustion engine according to the present invention is provided with a plurality of combustion chambers and communicating paths for connecting the adjacent combustion chambers to each other. As a result, mixed gases in the plurality of combustion chambers flow in accordance with the elevation of the piston or the rotation of the rotor. The strength of the squish is indicated by the difference of volume reduction ratio of the combustion chambers each in accordance with the elevation of the piston, that is, the difference of the distance and volume of the combustion chambers in the axial direction of the cylinder. In the present invention, a distance in the axial direction of the cylinder of a downstream combustion chamber in the flame propagating route is sufficiently larger than the clearance of the communicating path, which permits no strong squish toward the ignition plug to be generated before combustion. When the piston approaches its top dead center position, the ignition plug ignites the mixed gas around the ignition plug, and a flame face, which is small at the initial stage, becomes gradually large to expand the mixed gas. Then, unburnt mixed gas around the flame face is pushed outwardly due to the expansion of the combustion gas and flows into the combustion chamber without an ignition plug through the narrow communicating path. At this moment, the velocity of the mixed gas is increased to reduce the temperature of the mixed gas. As a result, the temperature of the mixed gas is decreased to prevent a knocking from being generated. Further, since the distance of the combustion chamber in the axial direction of the cylinder is larger than the clearance of the communicating path, a swirl is prone to be generated and the flow is maintained in the downstream combustion chamber, permitting an unburnt portion at an end thereof to be accelerated.

### BRIEF DESCRIPTION OF THE DRAWINGS

The present invention will be more apparent from the ensuring description with reference to the accompanying drawing wherein:
Figure 1 is a cross-sectional view showing the structure of a first embodiment of the present invention;
Figure 2 is a cross-sectional view showing a second embodiment of the present invention in which tiered portions are provided to the cylinder head and the piston;
Figure 3 is a cross-sectional view showing a third embodiment of the present invention in which a sub-com- bustion chamber is formed in the cylinder head;
Figure 4 is a cross-sectional view showing the structure of a fourth embodiment of the present invention in which the third embodiment is modified;
Figure 5 is a cross-sectional view showing the structure of a fifth embodiment of the present invention;
Figures 6A and 6B are cross-sectional views showing the structure of the two embodiments in which the present invention is applied to a four-cycle engine with a pentroof-type combustion chamber;
Figure 7 is a cross-sectional view showing the structure of an embodiment in which the present invention is applied to a rotary piston engine; and
Figure 8 is a drawing for explaining an ngl in a composite cycle.

### DETAILED DESCRIPTION OF PREFERRED EMBODIMENTS

Embodiments of the present invention will be explained with reference to drawings.

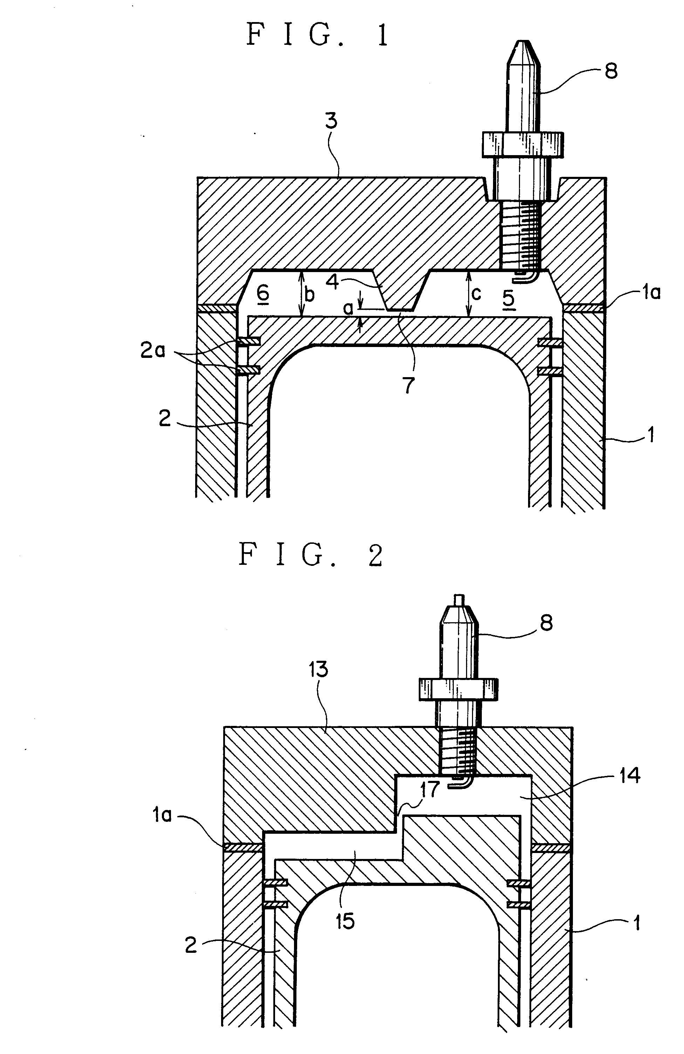

Figure 1 is a cross-sectional view of a combustion chamber adjacent to a top dead center position of a two-cycle spark ignited internal combustion engine. A cylinder 1 is provided with a cylinder head through a gasket 1a and a piston 2 is disposed therein which can move up and down in the cylinder 1. Adjacent to a top portion of the piston 2 is provided a plurality of piston rings 2a to maintain airtightness.

A dividing projection 4 is formed on the cylinder head 3 and when the piston reaches its top dead center position, two combustion chambers 5 and 6 are formed on both sides of the dividing projection 4 between the cylinder head 3 and the piston 2. A communicating path 7 with a narrow clearance a is provided between a lower surface of the dividing projection 4 and the piston 2 at the top dead center position.

When the clearance a between the communicating path 7 is sufficiently small in comparison to a distance b of the downstream combustion chamber 6 in a flame propagation route in the direction parallel to the axis of the cylinder, the clearance a may be admitted to be almost the same as a squish clearance or slightly larger than the squish clearance. For example, when b is 10mm, a is preferably in a range from 1mm to 4mm, and when b is 3mm, a is preferably be about 1mm or less than 1mm.

An ignition plug 8 is attached to only the combustion chamber 5 but is not attached to the combustion chamber 6. The dividing projection 4 may be linearly formed in parallel to the diameter of the piston 2 or may have a structure enclosing the combustion chamber 5 of the combustion chambers circularly. In such a case, the other combustion chamber 6 has a shape of a lunette to enclose the combustion chamber 5.

A point of the present invention is in that a strong squish directed to the ignition plug 8 is not generated at a compressive process before ignition and a strong flow of an unburnt mixed gas from the combustion chamber 5 to the combustion chamber 6 through the communicating path 7 is generated as combustion gas expands after the ignition.

That is, the squish at the compressive process before ignition is generated from a combustion chamber with large volume reduction ratio to a combustion chamber with small volume reduction ratio in accordance with the elevation of the piston. However, in an embodiment shown in Fig. 1, since the distances b and c of the combustion chambers 5 and 6 repeatedly in the axial direction of the cylinder, no strong squish toward the ignition plug 8 is generated.

If the distance b is shorter than c, the squish toward the ignition plug is generated before the ignition. However, the distance of a normal squish area is almost the same as the thickness of the gasket 1a. Therefore, in order to generate a strong squish, it is required to design the distance b in such a manner as to be almost the same as the distance a. However, as long as the distance b is remarkably larger than the distance of the normal squish area (the thickness of the gasket 1a) as in the present invention, even if the distance b is shorter than the distance c, no strong squish is generated.

The ignition plug 8 sparks to ignite surrounding mixed gas at the position illustrated in Fig. 1. The flame is enlarged in the combustion chamber 5 and the combustion gas expands to permit surrounding unburnt mixed gas to forcibly flow into the combustion chamber 6 through the communicating path 7. When the unburnt mixed gas passes the communication path 7, the velocity thereof increases, which reduces the temperature of the mixed gas. Then, the mixed gas with decreased temperature flows into the combustion chamber 6 so as to be mixed with the unburnt mixed gas in the combustion chamber 6 to reduce the temperature thereof, preventing a self-ignition. As a result, an unti-knocking function of the engine is improved.

Further, with the structure shown in Fig. 1, the unburnt mixed gas which flows into the downstream combustion chamber 6 is increased. Moreover, the distance b is wide so that the unburnt mixed gas flowing into the chamber 6 is prone to make a swirl to maintain the flow, which facilitates the decrease of the temperature.

The working of the present invention is mainly performed at the combustion process. The start of the combustion, that is, the ignition by the ignition plug is initiated immediately before the piston reaches its top dead center position, which is represented as -10° by crank angle (0° of the crank angle at the top dead center position). On the other hand, it is said that the combustion process at the high load operation is finished at +15° of the crank angle. When this angle is converted into the vertical movement of the piston, the movement is only approximately 1% to 2% of the stroke of the piston. That is, during the combustion process, the piston is mainly positioned in the vicinity of its top dead center and it is considered that it shows little movement. Therefore, the position of the piston in the combustion process is slightly moves up and down from the position of Fig. 1, but, it may be considered that the position is maintained at the same position and the communication path 7 maintains to be narrow during the combustion process.

Figure 2 shows the second embodiment of the present invention. In this embodiment, the piston 2 is provided with a tiered portion at the top thereof and the cylinder head 13 is provided with an another tiered portion corresponding to the tiered portion of the piston, which forms two combustion chambers 14 and 15. A communicating path 17 is formed vertically. The relation between the clearance of the communicating path 17 and the distance between the two combustion chambers 14 and 15 in the axial direction of the cylinder is the same as the embodiment illustrated in Fig. 1.

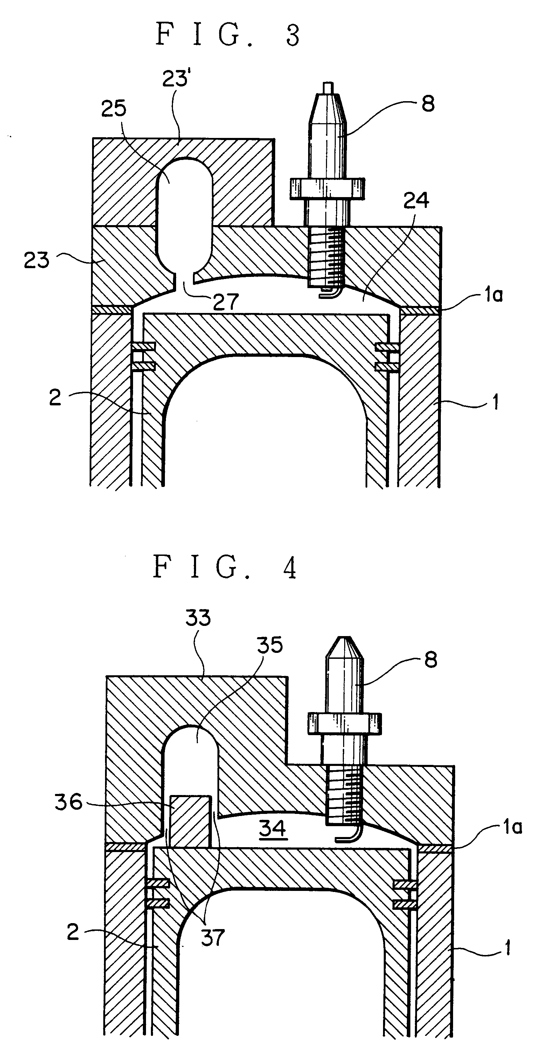

Figure 3 shows the third embodiment of the present invention. The structure of the engine in this embodiment resembles an indirect injection diesel engine. That is, an extended portion 23' is formed at the cylinder head 23 and the extended portion is hollowed out to form a sub-combustion chamber 25 having a shape of a bottle and is in communication with a neck portion of the bottle to a main combustion chamber 24. A throttle portion of the neck works as a narrow communicating path 27. The sub-combustion chamber 25 is formed at a latter half of the flame propagating route caused by the ignition plug 8 or in the vicinity of the end portion thereof. The sub-combustion chamber may be formed at the upper portion of the piston. Further, when the communicating path 27 is formed so as to be inclined more than the embodiment shown in Fig. 3 so that the flow of the unburnt portion which flows through the communicating path 27 flows along an inner surface of the sub-combustion chamber substantially in the direction of a tangent, the swirl of the unburnt portion maintains for a longer period of time. Further, the sub-combustion chamber and the communicating path may be formed slantingly.

Figure 4 shows the forth embodiment as a modification of the third embodiment. In this embodiment, a sub-combustion chamber 35 is formed in the cylinder head 33, but, a neck portion is not provided. In place of the neck portion, a projection 36 is attached to the head of the piston 2 so that the projection 36 proceeds into the sub-combustion chamber 35 in the vicinity of the top dead center of the piston to form a communicating path 37 around the projection 36. With this structure, a portion where throttle loss occurs is limited to a portion adjacent to the top dead center.

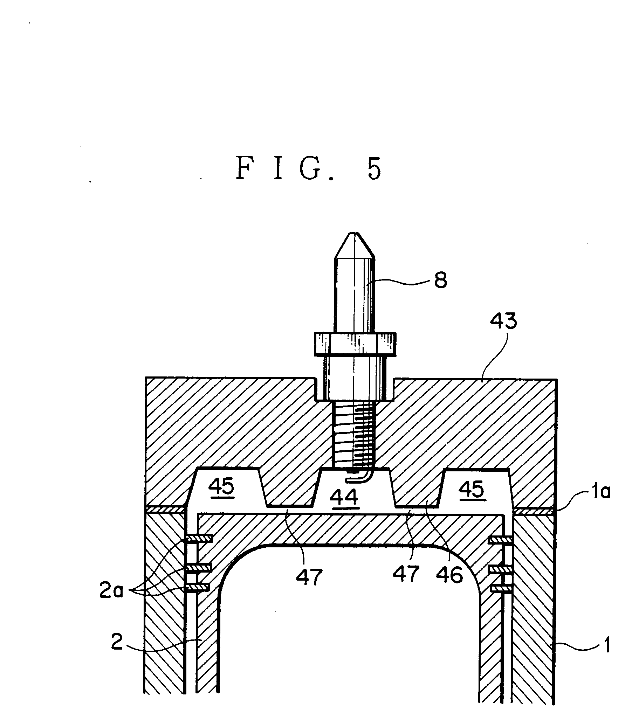

Figure 5 shows an embodiment in which a combustion chamber is formed circularly. A cylinder head 43 is provided with a ring like dividing projection 46 and a communicating path 47 is formed between the tip of the projection 46 and the piston 2. Further, a combustion chamber 44 with an ignition plug 8 is formed at the center of the cylinder head and a doughnut like combustion chamber 45 without an ignition plug is formed around the combustion chamber 44.

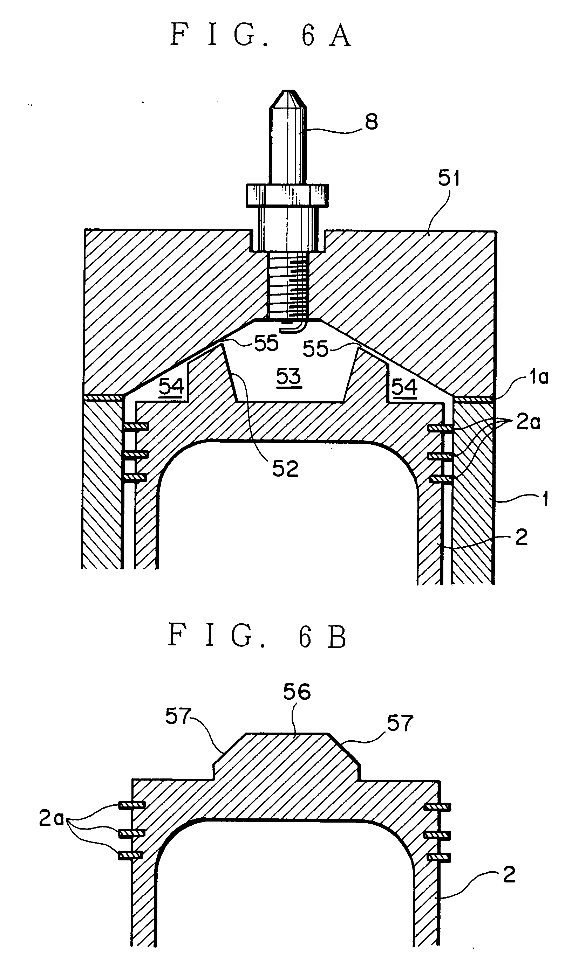

The embodiment illustrated in Figs. 1 to 5 can be applied to a four-cycle engine as well as a two-cycle engine. Further, the embodiment is not limited to a gasoline engine but may be applied to a gas engine or the like. From this point of view, Figure 6A shows an embodiment in which the present invention is applied to a four-cycle engine and a pentroof-type combustion chamber is used as a representative combustion chamber of the four-cycle engine.

A pentroof-type cylinder head 51 is provided on a piston 2 and a cylinder 1, and a ring-like projection 52 is formed on an upper surface of the piston 2 to divide a combustion chamber into an inner combustion chamber 53 and an outer combustion chamber 54 with respect to the projection 52. Then, an upper surface of the projection 52 is inclined along an inner wall of the cylinder head 51 to form a communicating path 55 between the upper surface of the projection and the inner face of the cylinder head. Further, the projection 52 may be formed linearly.

As illustrated in Fig. 6B, a projection 56 on an upper surface of the piston may be formed to be a substantial trapezoid and a narrow communicating path may be formed between a slant face 57 of the trapezoid and an inner face of the cylinder head.

Besides a pentroof type combustion chamber, a plurality of combustion chambers may be formed by forming a projection in accordance with a shape of the inner face of the cylinder head. Moreover, in the embodiments shown in Figs. 1 to 6, when the area of the communicating path is formed wider, a squish directed to the ignition plug is generated but a strong squish is not generated since another squish is generated in a combustion chamber without the ignition plug.

In the embodiments illustrated in Fig. 1 to 6, two combustion chambers are provided. However, more than two combustion chambers may be formed by increasing the number of dividing projections and combustion chambers. In such a case, at least one combustion chamber should not be provided with an ignition plug 8. Ignition plugs may be attached to the all combustion chambers and at least one ignition plug may be used exclusively for a low load operation and the ignition plugs may not be used at high load operation. It is because there is no fear of a knocking at the low load operation and the simultaneous use of two kinds of ignition plugs permits combustion term to be shorten at the low load operation and prevents an ngl from being decreased.

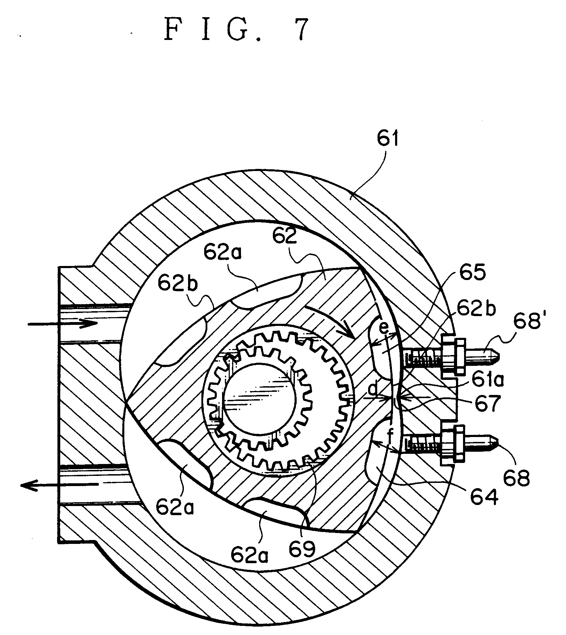

Figure 7 shows an embodiment in which the present invention is applied to a rotary piston engine. In the rotary piston engine, two ignition plugs 68 and 68' are attached to a casing 61, and two concave portions 62a are formed in accordance with the above two ignition plugs 68 and 68' on each side of a triangular rotor which rotates in the casing 61, and a flat portion is provided between the two concave portions. In this case, the position and dimension of the flat portion 62b satisfies the following relation. That is, in the combustion process, the flat portion 62b continuously opposes a projection 61a of a trocoid face of the casing 61. Then, a communicating path 67 is formed between the flat portion 62b and the projection 61a. In other words, combustion chambers 64 and 65 are formed at upper and lower portions of the figure with a communicating path 67 in between. Further, a clearance of the communicating path 67, that is, a clearance d between the flat portion 62b and the projection 67, may be sufficiently small in comparison to a radial distance e of an inner gear 69 of the downstream combustion chamber 65 in the flame propagating route similar to the above reciprocating engine.

In the structure described above, two ignition plugs 68 and 68' are used at low load operation. On the other hand, either one of them is used at the high load operation. Unburnt mixed gas is accelerated in the communicating path 67 to reduce the temperature of unburnt mixed gas in the other combustion chamber, preventing a knocking from being generated. Further, an ignition plug of the upstream combustion chamber 65 in the rotating direction of the rotor is used at the high load operation, the flow of the mixed gas due to the movement of the rotor before ignition facilitates the flow of the unburnt mixed gas in the combustion process.

In addition to the embodiments described above, when a distance b in the direction parallel to an axis of the cylinder of the downstream combustion chamber in the flame propagating route of a reciprocating engine, or, a radial distance e of an inner gear in the rotor of the downstream combustion chamber in the flame propagating route, is larger than the same distance c or f in the combustion chamber with an ignition plug which is used at high load operation, a squish in the direction of the flame propagating route is generated in the downstream combustion chamber in the flame propagating route. The direction of the flow of the unburnt portion which flows in the direction of the flame propagating route in the combustion process coincides with that of the squish to facilitate the flow of the unburnt portion, which improves the unti-knocking function.

When the volume under combustion in the combustion chamber with an ignition plug is too small, the quantity of accelerated unburnt mixed gas which flows into the combustion chamber without ignition plug becomes extremely small, which reduces the effect of restricting the increase of the temperature. On the contrary, the volume of the combustion chamber without ignition plug is too small, the quantity of the unburnt mixed gas flowing into the combustion chamber becomes too small, which reduces the effect of decreasing the temperature. As a result, the quantity of the unburnt mixed gas which is accelerated through the communicating path can not be more than a half of the total quantity of the mixed gas even though the volume of the combustion chambers are equally divided. Therefore, another (a third) combustion chamber is added between those combustion chambers. As a result, when the mixed gas flows from the third combustion chamber to the downstream combustion chambers, unburnt mixed gas in the third combustion chamber is added to the mixed gas, which makes up for the shortage of the mixed gas which is accelerated through the communicating path.

In the above embodiment except for Figs. 3 and 4, the unburnt mixed gas flowing through the communicating path flows along the inner face of the downstream combustion chamber in the flame propagating route to form a swirl. However, when the inner face of the downstream combustion chamber in the flame propagating route is formed in the vicinity of a swirl chamber, the swirl of the unburnt mixed gas at the end portion thereof is maintained longer period of time.

The amount of NOx generated is remarkably increased when the highest temperature is high. Then, in the embodiment described above, the highest temperature of the unburnt portion is restricted. Therefore, not only a knocking is prevented but also the amount of NOx produced can be reduced in comparison to a conventional engine with the same torque.

With the present invention, a knocking at high load operation can be prevented with a simple structure. Therefore, a compression ratio and a maximum intake quantity can be increased and a fuel with low octane value can be used. Moreover, the quantity of NOx at high load operation can be reduced in comparison to a conventional engine with the same operation load.

## Claims

1. An internal combustion engine with improved unti-knocking function comprising:
a plurality of combustion chambers formed in a cylinder when a piston reaches its top dead center position;
narrow communicating paths for connecting adjacent combustion chambers to each other; and
ignition plugs attached to remaining combustion chambers except for at least one combustion chamber,
wherein a distance of a downstream combustion chamber in the flame propagating route in an axial direction of said cylinder is larger than a normal clearance of a squish area, and clearances of said communicating paths are sufficiently smaller than said distance of said downstream combustion chamber in the flame propagating route in the axial direction of said cylinder.

2. An internal combustion engine with improved unti-knocking function as claimed in claim 1, wherein said plurality of combustion chambers are divided by dividing projections formed on said cylinder head and said communicating paths face to lower faces of said dividing projections.

3. An internal combustion engine with improved unti-knocking function as claimed in claim 1, wherein said plurality of combustion chambers are divided by dividing projections formed on said piston and said communicating paths face to one of upper faces and side faces of said dividing projections.

4. An internal combustion engine with improved unti-knocking function as claimed in claim 1, wherein a tiered portion is formed at a top of the piston, and another tiered portion corresponding to said tiered portion of the piston is formed on said cylinder head, and said communicating path is formed vertically along said both tiered portions.

5. An internal combustion engine with improved unti-knocking function as claimed in claim 1, wherein said plurality of combustion chambers are formed as main combustion chambers with ignition plugs and sub-combustion chambers which are located at a latter half of the flame propagating route or in the vicinity of an end portion of said flame propagating route, and inlet openings of said sub-combustion chambers are formed narrow so as to function as said communicating paths.

6. An internal combustion engine with improved unti-knocking function as claimed in either one of claims 1 to 5, wherein distances in said downstream combustion chamber in the flame propagating route in the axial direction of said cylinder are larger than corresponding distances in said combustion chambers with ignition plugs.

7. An internal combustion engine with improved unti-knocking function comprising:
a rotor;
two concave portions with a distance formed on upper face side of said rotor;
a communicating path formed between a projection on a trocoid face forming an inner surface of a casing and a flat portion between said two concave portions on the upper face of the rotor;
two combustion chambers formed on both sides of said communicating path; and
an ignition plug attached to either one of said combustion chambers,
wherein a dimension of said flat portion is determined such that said projection continuously opposes said flat portion throughout a combustion process with high load.

8. An internal combustion engine with improved unti-knocking function as claimed in claim 7, wherein a distance of a downstream combustion chamber of said engine in a radial direction of an inner gear in said rotor is larger than a corresponding distance in a combustion chamber with ignition plug.

9. An internal combustion engine with improved unti-knocking function as claimed in claim 1 or 7, wherein ignition plugs exclusively used for low load operation are attached to said combustion chambers without ignition plugs.
